# EUROPEAN PATENT APPLICATION

(11) **EP 1 236 978 A1**
(43) Date of publication of application: **04.09.2002**
(21) Application number: 01600005.1
(22) Date of filing: 28.02.2001
(51) Int. Cl.: G01F 23/24

(54) **Portable device for filling up tanks/barrels with liquids**

(71) Applicant: S.M. Automations, 19009 Pikermi (GR)
(72) Inventor: Stathopoulos, Charalambos, 19009 Pikermi (GR)

(57) **Abstract**

The system consists of three devices. The device A is placed at the mouth of the tank-barrel and fixes three terminals, two at the same depth, point 1 (picture 1) and the third one higher, point 2, (picture 1). As soon as the liquid reaches the first two terminals, the beeper and the Led of the device B (picture 1), function intermittently (warning signal). As soon as the liquid reaches the third terminal the beeper and the Led function continuously and provided that the device C has been connected to the filling pump, a wireless order for pause of function is given.

Via the device B (picture 1) there is the possibility to control wirelessly the function of the filling pump, regardless of the terminals.

## Description

This invention concerns a system of devices enabling the filling up of tanks-barrels, especially if the filling mouth is small and inaccessible, providing also the potential for a remote control of the filling pump.

The filling up of tanks that have a small mouth, for example wine barrels, is a procedure requiring constant supervision of the level of the liquid through the small space of the aperture left uncovered by the filling tube. This procedure may become even harder depending on the position of the tank, for instance when there are barrels in two rows in height. In this case it becomes extremely difficult to fill up the lower row because of the barrels placed above it.

The present invention is based on the short-circuit created by the liquid when it reaches the terminals that are placed downwards from the mouth of the tank-barrel. The two terminals are in a lower position than the third one and when reached by the liquid an order for a warning signal is given, that is the intermittent function of a beeper and a Led. When the liquid reaches the third terminal, the order for the final signal is given, that is the continuous function of the beeper and the Led. At the same time, the possibility for a wireless order for the pause of function of the filling pump is also available provided that we have connected the corresponding device to the pump.

With this system the possibility to fill up tanks-barrels automatically is given, even when the mouth of the filling control is small and/or the mouth is difficult of access.

The visual control of the level of the liquid from the filling mouth, that becomes considerably difficult when the mouth is small and half-covered with the filling tube, requires gradual supervision at the beginning and constant supervision towards the completion of the filling up so as to stop the function of the pump in time.

In the wooden barrels of wine and brandy towards the completion of the filling up procedure the liquid level rises really fast because of the shape of the barrels, thus requiring special care. Often, in case of barrels placed in two or three rows in height the filling up of the lower row can be very difficult and even impossible without removing the upper row.

The present invention can solve these problems.

Picture 1 presents the devices A, B, C comprising the invention and their setting.

The device A (picture 1) simply connects the terminals with the cable coming from the device B (picture 1) and holds the three terminals at the mouth of the tank-barrel. The three terminals are held in place by a plastic insulating material. Two of them are placed at a warning depth, point 1 (picture 1) and the third terminal is higher, at the final filling point, point 2 (picture 1)

In the device B (picture 1) there is the electronic tablet through which the conductance control of the terminals and the wireless function control of the filling pump, the beeper and the Led are carried out. When the liquid reaches the first two terminals, point 1 (picture 1), an order for the warning signal is given, that is the intermittent function of the beeper and the Led of the device B (picture 1) and this will continue until the liquid reaches the third terminal, point 2 (picture 1). As soon as the liquid reaches the third terminal the order for the final signal is given, that is the continuous function of the beeper and the Led. At the time of the final signal, provided the automatic function has been chosen in the device B and the device C (picture 1) has been connected to the filling pump, a wireless order is given by the device B to the device C for the pause of function of the pump. Finally, through the device B we have the possibility for a manually operated wireless control of the filling pump using the ON and OFF switches. A 9V battery feeds the device B. In this device there is a trim which allows us to alter the final ordered height, that is of the point 2 (picture 1).

We connect the device C (picture 1) to the filling pump if we want to control its function wirelessly. This device has the receiver which receives the orders of the transmitter of the device B (picture 1) and via a relay controls the function of the pump. It functions with one-phase and three-phase pumps.

This system can also act as an informative one, when filling up tanks-barrels, if we connect the devices A and B (picture 1) and not the device C (picture 1).

To fill up barrels, with a flow by gravity from the tank, the device C (picture 1) can be connected to an electric sluice valve controlling the flow, replacing the pump or using it in parallel.

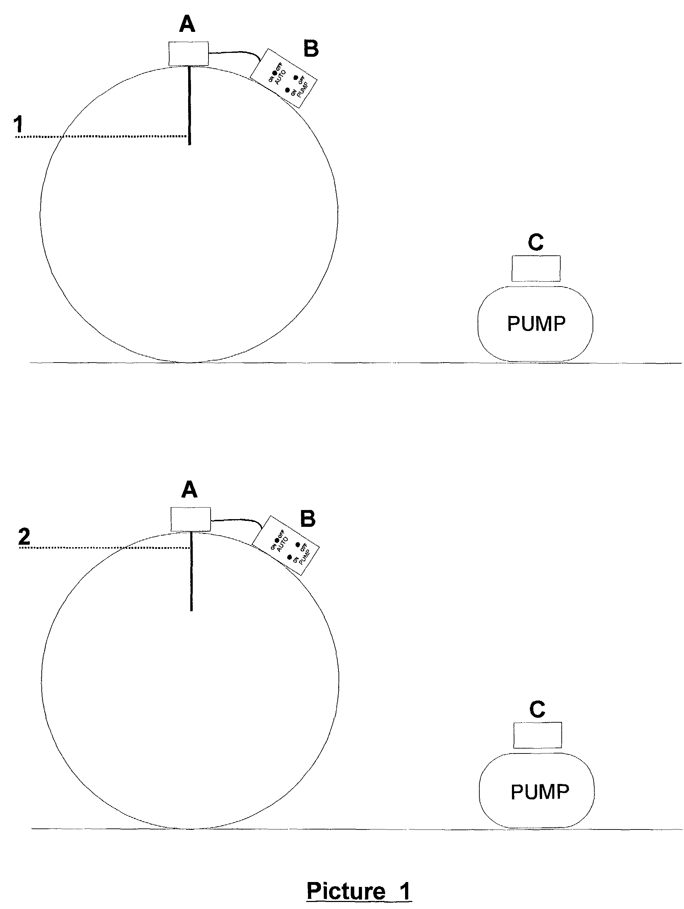

## Claims

1. Filling up control of tanks and barrels, **characterized by** the possibility of control via a portable device.

2. Filling level control with terminals whose conductance we measure having also the possibility to adjust the level height electronically.

3. Filling pump control, following the orders of the terminals of the previous paragraph's requirement so as to achieve the automatic pause of function when the liquid reaches the predetermined level as well as the remotely controlled function.
